# EUROPEAN PATENT APPLICATION

(11) **EP 2 465 792 A2**
(43) Date of publication of application: **20.06.2012**
(21) Application number: 11009845.6
(22) Date of filing: 14.12.2011
(51) Int. Cl.: B65D 85/804

(54) **Capsule for coffee, tea and other soluble products**

(30) Priority: 20.12.2010 ES 201031278 U
(71) Applicant: Diaz Blanco, German, 45910 Escalona, Toledo (ES)
(72) Inventor: Diaz Blanco, German, 45910 Escalona, Toledo (ES)
(74) Representative: Tari Lazaro, Aida

(57) **Abstract**

Capsule designed on the basis of a casing (1), intended to receive inside it the soluble product being considered, and a rear cover (4) which seals the capsule, made of biodegradable polypropylene suitable for food use obtained from vegetable starch, such as maize or potatoes.

The casing profitably presents a truncated pyramidal configuration, with a hexagonal base and it includes inside a hexagonal filter (5) made of biodegradable polypropylene suitable for food use, from which some walls (6) emerge perpendicularly and at equal angles which form cells.

Additionally, in the casing (1) there is a cylindrical cavity (2), without perforating the capsule, in which a porous cylindrical pad (8), filled with flavouring essences, can be suitably coupled.

## Description

The present invention relates to a hexagonal casing or capsule body made of biodegradable polypropylene suitable for food use for filling with ground coffee, tea or other soluble products which will be sealed with a hexagonal cover with a circular ring. It will also optionally include inside, specifically on the bottom, a hexagonal filter made of biodegradable polypropylene suitable for food use which will allow the liquid to pass through and will have the task of retaining the coffee grounds or remains of tea or other soluble products so that it does not allow any of these grounds or remains to reach as far as the cup during the moment of delivery or infusion. There will also be some walls projecting from this filter which will form cells, with either six cells or four being able to be created; these walls will serve to strengthen the casing when the machine performs the delivery or infusion so that the casing or capsule does not deform in the lower and upper part thereof when inserted in the coffee pot and, much more important, once filled with product, basically ground coffee, it will not become compacted or compressed as occurs with conventional capsules lacking this system of cells. In the lower base of the casing or capsule body there will be a circular shaped central cavity which will be able to be filled with a pad flavoured with essence which, when carrying out the delivery with the coffee pot, will in that same act allow the coffee, tea or other soluble drinks to be drunk with flavours. This is optional according to the taste of the drinker, and if desired the flavoured drink will be able to be obtained when carrying out the delivery or infusion in the espresso capsule coffee pot.

The object of this invention is to be able to use the same coffee pot and with the same hexagonal casing with hexagonal cover and circular ring so that natural flavouring essences can be introduced into the lower bottom of the casing in order to be able to have a hot drink, espresso coffee, tea or other drinks with their natural flavour or with the desired flavour without thereby having to change the coffee pot or the capsule nor handle any product, given that the flavouring essence is incorporated into the pad fitted in the base or bottom of the casing. As it can be fitted in the central part of the cylindrical cavity located in the bottom of the casing or capsule and a capsule is formed filled with ground coffee, tea in leaf form, natural or other soluble products, so the flavoured drink will be able to be drunk. If no pad is fitted, the coffee or tea will be able to be drunk in their natural form, without any flavouring. This does not present any problem for the functioning of the espresso coffee pot nor for the functioning of the capsule since the coffee or tea with flavour is optional for the consumer, and the capsules will be able to be bought on the other hand, and the flavouring pads on the other.

### BACKGROUND OF THE INVENTION

There currently exist a great many formats of coffee capsules with different designs and structures, under numerous brands and with different materials, some made of filter paper, known as single-dose, others made of rigid plastic, flexible plastic or aluminium, known as coffee capsules, but none of these capsules exist with a hexagonal format in the casing or body of the capsule, since they are all have a structure that is conical and smooth. The hexagonal casing or capsule body which the invention proposes creates certain channels inside the casing or body capsule which serve to direct the liquid being delivered or infused under pressure in the inside of the capsule to the bottom of the casing or body of the capsule for a better and clean pouring of the delivery and a better extraction of the coffee, tea or other drinks. It will also incorporate a hexagonal filter made of biodegradable polypropylene suitable for food use from which will project some walls which will form cells, with six cells or four being able to be created; these walls will serve to strengthen the casing when the machine performs the delivery or infusion so that the casing or capsule does not deform in the lower and upper part thereof when inserted in the coffee pot and, much more important, once filled with product, basically ground coffee, which is the product that can become most compacted since coffee contains fats, it will not become compacted or compressed as occurs with conventional capsules lacking this system of cells, which will be located in the interior of the bottom of the capsule, while its perforated base performs the task of filtering or preventing any grounds or remains from reaching the cup during the delivery or infusion of the coffee or tea. Nor do there exist any capsules with the hexagonal polypropylene cover with a perimetric ring independent of the casing or body of the capsule. The casing or capsule body which the invention proposes is sealed under pressure with the hexagonal cover with circular ring which, once sealed or embedded in the casing, will form a hexagonal capsule with an optional system for the flavouring of drinks.

The capsules that already exist on the market are all made of a single piece and, once filled, are covered, some with a filter paper attachment in the oldest models and others with a triple layer complex of polyethylene aluminium and non-biodegradable polypropylene, while others are sealed with aluminium. All these systems work but they lack the capacity for biodegradation by an organic system, on the contrary to the casing or capsule body and the cover which the invention proposes. Both of them, as they are made of biodegradable polypropylene suitable for food use, will degrade by natural organic processes at the same time as the grounds and remains of organic matter contained inside the capsule.

Moreover, thanks to the hexagonal shape it has, the casing or capsule body which the invention proposes allows for better pouring of the liquid in order to collect the delivered products better and obtain cups of coffee with more cream and with flavours that are less bitter and more pure. It is also proposed that a cup of coffee, tea or other soluble drinks could be flavoured at the same time as the delivery or infusion, by means of placing a flavouring fitting or pad in the cavity which the casing has in the circle created in the lower base.

Although there already exist coffees or teas with flavours, these aromas are mixed with the product in the same capsule without any possibility of drinking the coffee or tea in capsule form with the natural flavour of the coffee (flavour free). If it is wished to be able to taste the flavour that is wanted just by incorporating a portion of flavouring essence into the said casing or capsule body in the pad located in the lower base and thus be able to have the drink with the desired flavour by choosing those options, then this is permitted by the solution proposed by the present invention.

Another obvious solution would be to have jars with flavours or syrups and to add the flavour to the cup of coffee once the delivery or infusion has taken place. But this way of flavouring, though perfectly valid, has the drawback that in order to flavour the cups one would need to have various bottles or jars or syrups in the home, which would be very problematic given the bulky size which these jars or bottles of syrup have, which are normally used in specialized places such as bars or cafés. For this reason it would be very difficult to be able to have a wide range of flavours in the home or office and nor would the result be the same. The proposal of the invention can also carry out the flavouring if it is wished or not, since it is as simple as not locating the pad in the lower cavity of the casing or capsule body for the flavouring, with which we would not have any flavour. In addition the flavouring can be done at the same time as the delivery or infusion of the coffee or tea by introducing the capsule in the coffee pot if the latter has the pad in the base with the same water being added as for creating the coffee, with which we would have a flavoured cup. In this way, the flavour will always be uniform, with the dispensing of the liquid and its quantity not being left to chance or the accuracy of the waiter or user who is flavouring a product, as occurs so far, the traditional method being much more unequal and scarcely harmonious since, when the flavouring is done using bottles with dispensers in the top, we cannot judge how much liquid is going to be added to our drink when the dispenser for syrup or other product is pressed. The invention that is proposed improves and facilitates the best option for flavouring coffee, tea or other drinks in a way that is uniform and with the right amount, just like the solution proposed by the invention.

### DESCRIPTION OF THE INVENTION

The capsule which the invention proposes permits coffee to be made with a more sumptuous cream, better extraction of the liquid in the bottom of the capsule and a flavour that is purer and less bitter, due to the displacement of the liquid via the channels of the hexagonal shape of the casing or capsule body. It will also incorporate a hexagonal filter made of biodegradable polypropylene suitable for food use from which will project some walls which will form cells, with either six cells or four being able to be created; these walls will serve to strengthen the casing when the machine performs the delivery or infusion so that the casing or capsule does not deform in the lower and upper part thereof when inserted in the coffee pot and, much more important, once filled with product, basically ground coffee, which is the product that can become compacted most due to the fats it contains, it will not become compacted or compressed as occurs with conventional capsules lacking this system of cells which will be located in the interior of the bottom of the capsule, while its perforated base performs the function of filtering and preventing any of these grounds from reaching the cup during the delivery or infusion of the coffee or tea. It also proposes the possibility of flavouring the drink by means of the exterior cylindrical pad located in the bottom of the casing or capsule body in order to be able to choose to have the drink with the natural flavour of coffee, tea or other products or to have them flavoured just by placing the capsule formed by the casing and cover with or without flavouring without having any problems in the functioning of the espresso coffee pot. The solution which the invention proposes, of casing or hexagonal capsule body made of biodegradable polypropylene suitable for food use independent of the cover, also biodegradable, is furthermore a very clear option involving components that are biodegradable in a natural and organic way which will degrade naturally and organically along with the coffee grounds or remains of tea or other drinks. In other words, the capsule will be able to degrade in a short time using the route of organic refuse without having to carry out any special recycling, as occurs with other capsules on the market which are much more costly to recycle on account of their manufacturing materials and sometimes many of them will not be recycled and so will be present in the environment for years and can end up on the bottom of rivers, the sea or land. The solution which the invention proposes is, on the one hand, an improvement in the casing or capsule body due to the hexagonal shape for providing a better pouring of the liquid that has been delivered and which will drop to the bottom of the casing or capsule body via the grooves formed by the hexagonal faces, and which will also incorporate a hexagonal filter made of biodegradable polypropylene suitable for food use from which will project some walls which will form cells, with either six cells or four being able to be created; these walls will serve to strengthen the casing when the machine performs the delivery or infusion so that the casing or capsule does not deform in the lower and upper part thereof when inserted in the coffee pot and, much more important, once filled with product, basically ground coffee, which is the product that can become compacted most due to the fats it contains, it will not become compacted or compressed as occurs with conventional capsules lacking this system of cells which will be located in the interior of the bottom of the capsule, while its perforated base performs the function of filtering and preventing any of these grounds from reaching the cup during the delivery or infusion of the coffee or tea. Also very important, as the invention proposes, are the materials used in its manufacture or injection which will be of biodegradable polypropylene suitable for food use consisting of maize or potato starch. Moreover, there is the cover as an independent piece of the hexagonal casing or capsule, with a circular ring around its entire perimeter, for the complete formation of the capsule. This set of assembled pieces, in other words casing and cover, will form a hexagonal capsule of biodegradable polypropylene suitable for food use with the possibility if wished of flavouring the cups of coffee, tea and other soluble drinks.

Moreover, the solution for flavouring the drinks which the invention proposes is by means of a circular pad with pores, made of biodegradable polypropylene suitable for food use filled with the flavouring essence, which, when introduced into the circular cavity which the casing has as part of its manufacture in the exterior bottom or base of the same, will cause the coffee pot to flavour the coffee, tea or other soluble drinks for us, if we place the pad inside when carrying out the delivery or infusion. If we choose not to place the pad, the coffee, tea or other soluble drinks will come out with their natural flavour of coffee, tea or other soluble drinks created by an espresso coffee pot for capsule.

### DESCRIPTION OF THE DRAWINGS

In order to complement the description that is being made, and with the object of aiding a better understanding of the characteristics of the invention, in accordance with a preferred example of practical embodiment thereof, attached as an integral part of said description is a set of drawings in which the following has been represented in an illustrative and non-limiting way:

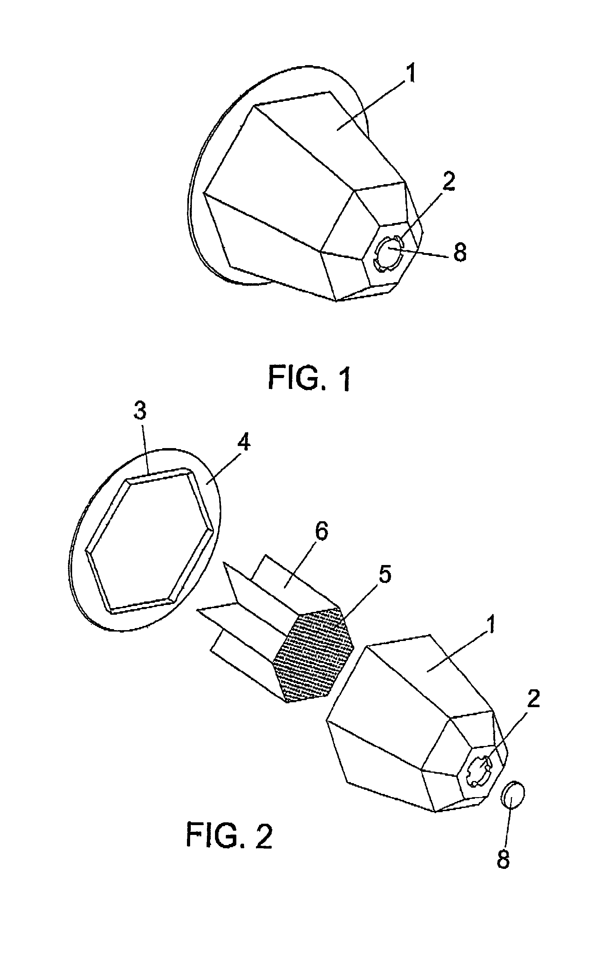

Figure 1.- Shows a perspective view of a capsule for soluble products carried out in accordance with the object of the present invention.
Figure 2.- Shows an exploded view of the capsule of the previous figure.

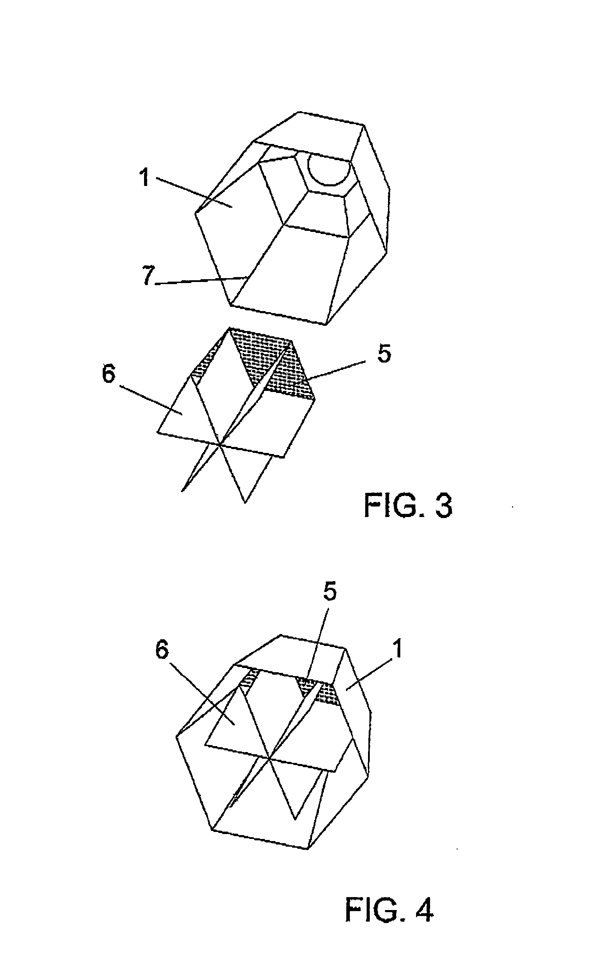

Figure 3.- Shows a perspective view of the rear of the assembly of the previous figure without including the cover.
Figure 4.- Finally, shows the assembly of figure 3, duly fitted together.

### PREFERRED EMBODIMENT OF THE INVENTION

Schematically represented in the stated figures is a casing (1) or capsule body with a hexagonal shape, though it could optionally be materialized in a capsule with a truncated conical configuration, the capsule of the example having the form of a hexagonal based truncated pyramidal, with all its faces and routes ending in a central point in the lower part or the bottom of the casing or capsule body for an efficient pouring of the delivered liquid, which will flow along the channels forming the face of the hexagon after having delivered the coffee, tea or other soluble drinks, thereby permitting a better concentration of cream in the case of espresso coffee. In the outer part, more specifically in the base, the said casing (1) or capsule body provides a cylindrical cavity (2), without perforating the capsule, in order optionally to place a porous cylindrical pad (8), filled with essence. The casing is complemented with a circular cover (4) with a hexagonal frame (3) on which the casing (1) is coupled, these elements being preferably obtained in biodegradable polypropylene suitable for food use, the function of that cover (4) being to hermetically seal the casing (1) or capsule body. The circular configuration of the cover (4) defines a circular ring with respect to the casing (1), said ring serving to secure the capsule in the delivery device of the coffee pot.

Fitted inside the bottom of the capsule will be a hexagonal filter (5) made of biodegradable polypropylene suitable for food use from which emerge some walls (6) perpendicularly and at equal angles which will form cells, with either six cells or four being able to be created; these walls will serve to strengthen the casing when the machine performs the delivery or infusion so that the casing or capsule does not deform in the lower and upper part thereof when inserted in the coffee pot and, much more important, once filled with product, basically ground coffee, which is the product that can become compacted most due to the fats it contains, it will not become compacted or compressed as occurs with conventional capsules lacking this system of cells, while its perforated base performs the function of filtering and preventing any of these grounds from reaching the cup during the delivery or infusion of the coffee or tea.

Finally, the fact can be emphasized that the internal angles (7) of the casing (1) define channels which cause the liquid of coffee, tea or other soluble products delivered under pressure in the interior of the casing or capsule to flow better, with the extracted liquid exiting with more cream and a flavour that is clean and less bitter due to less contact with the grounds that have now been delivered in the interior of the casing.

## Claims

1. Capsule for coffee, tea and other soluble products which, being of the type designed on the basis of a casing, intended to receive inside it the soluble product, coffee or tea being considered, and a rear cover which hermetically seals the capsule, is **characterized in that** the casing is obtained in biodegradable polypropylene suitable for food use prepared from vegetable starch, such as maize or potatoes.

2. Capsule for coffee, tea and other soluble products, according to claim 1, **characterized in that** the casing presents a truncated pyramidal configuration, with a hexagonal shape and base.

3. Capsule for coffee, tea and other soluble products, according to claim 1, **characterized in that** the casing presents a truncated conical configuration.

4. Capsule for coffee, tea and other soluble products, according to claims 1 and 2, **characterized in that** an array of hole or pores is provided in the hexagonal base of the casing.

5. Capsule for coffee, tea and other soluble products, according to claims 1 and 2, **characterized in that** the rear cover. (4) is materialized in a circular cover on the basis of biodegradable polypropylene suitable for food use, with a hexagonal frame (3) on which the casing (1) is hermetically coupled.

6. Capsule for coffee, tea and other soluble products, according to claim 1, **characterized in that** the casing ends in correspondence with its base in a circular ring, provision having been made so that the rear cover is materialized in a hermetically sealed cover with a preferably hexagonal configuration.

7. Capsule for coffee, tea and other soluble products, according to the foregoing claims, **characterized in that** an array of holes is provided in the cover.

8. Capsule for coffee, tea and other soluble products, according to the foregoing claims, **characterized in that** both the casing (1) and the cover (4) are obtained in biodegradable polypropylene suitable for food use, transparent or coloured.

9. Capsule for coffee, tea and other soluble products, according to the foregoing claims, **characterized in that** inside the casing (1) a hexagonal filter (5) made of biodegradable polypropylene suitable for food use is optionally established, from which emerge some walls (6) perpendicularly and at equal angles which form cells, said walls being able to be six or four in number.

10. Capsule for coffee, tea and other soluble products, according to the foregoing claims, **characterized in that** established in the upper end of the casing (1) is a cylindrical cavity (2), without perforating the capsule, in which a porous cylindrical pad (8), filled with flavouring essences, can be suitably coupled.
